(19) Europäisches Patentamt
European Patent Office
Office européen des brevets

(11) **EP 1 373 589 B1**

(12) **FASCICULE DE BREVET EUROPEEN**

(45) Date de publication et mention
de la délivrance du brevet:
**27.10.2004 Bulletin 2004/44**

(51) Int Cl.⁷: **C22C 38/44**, C22C 38/46,
C22C 38/48, C22C 38/52,
C22C 38/54, C21D 6/00

(21) Numéro de dépôt: **02730326.2**

(22) Date de dépôt: **03.04.2002**

(86) Numéro de dépôt international:
**PCT/FR2002/001151**

(87) Numéro de publication internationale:
**WO 2002/081766 (17.10.2002 Gazette 2002/42)**

(54) **ACIER ET TUBE EN ACIER POUR USAGE A HAUTE TEMPERATURE**

STAHL UND ROHR ZUR VERWENDUNG BEI ERHÖHTEN TEMPERATUREN

STEEL AND STEEL TUBE FOR HIGH-TEMPERATURE USE

(84) Etats contractants désignés:
**AT BE CH CY DE DK ES FI FR GB GR IE IT LI LU
MC NL PT SE TR**

(30) Priorité: **04.04.2001 FR 0104551**

(43) Date de publication de la demande:
**02.01.2004 Bulletin 2004/01**

(73) Titulaire: **V & M FRANCE**
**92100 Boulogne-Billancourt (FR)**

(72) Inventeurs:
• **ARBAB, Alireza**
**F-59300 Valenciennes (FR)**
• **LEFEBVRE, Bruno**
**F-59990 Estreux (FR)**
• **VAILLANT, Jean-Claude**
**F-75012 Paris (FR)**

(74) Mandataire: **Pellicani, Félix Angelo**
**SETVAL,130 rue de Silly**
**92100 Boulogne-Billancourt (FR)**

(56) Documents cités:
EP-A- 0 758 025          EP-A- 0 759 499
EP-A- 0 828 010          EP-A- 0 867 523
EP-A- 0 892 079

• PATENT ABSTRACTS OF JAPAN vol. 1997, no.
04, 30 avril 1997 (1997-04-30) -& JP 08 333657 A
(JAPAN STEEL WORKS LTD:THE;TOSHIBA
CORP), 17 décembre 1996 (1996-12-17) cité dans
la demande
• PATENT ABSTRACTS OF JAPAN vol. 1997, no.
01, 31 janvier 1997 (1997-01-31) -& JP 08 225833
A (NIPPON STEEL CORP;FUJITA TOSHIO), 3
septembre 1996 (1996-09-03) cité dans la
demande
• PATENT ABSTRACTS OF JAPAN vol. 1999, no.
08, 30 juin 1999 (1999-06-30) -& JP 11 061342 A
(MITSUBISHI HEAVY IND LTD), 5 mars 1999
(1999-03-05) cité dans la demande
• PATENT ABSTRACTS OF JAPAN vol. 1997, no.
11, 28 novembre 1997 (1997-11-28) -& JP 09
184048 A (KANSAI ELECTRIC POWER CO
INC:THE;MORINAGA MASAHIKO; MURATA
SUMINORI; S), 15 juillet 1997 (1997-07-15) cité
dans la demande
• PATENT ABSTRACTS OF JAPAN vol. 1996, no.
11, 29 novembre 1996 (1996-11-29) -& JP 08
187592 A (NIPPON STEEL CORP), 23 juillet 1996
(1996-07-23) cité dans la demande
• PATENT ABSTRACTS OF JAPAN vol. 017, no.
247 (C-1059), 18 mai 1993 (1993-05-18) -& JP 04
371551 A (NIPPON STEEL CORP), 24 décembre
1992 (1992-12-24) cité dans la demande

**Description**

DOMAINE TECHNIQUE

L'invention concerne les aciers pour usage sous contrainte à haute température aux environs de 600° à 650° C et plus particulièrement les aciers dits ferritiques à haute teneur en chrome qui possèdent une structure martensitique revenue tant à la température ambiante qu'à la température de service.

L'invention vise à s'appliquer à des produits métallurgiques tubulaires tels que par exemple des tubes de surchauffeurs, des tubes de resurchauffeurs, des collecteurs ou des canalisations de vapeur surchauffée ou resurchauffée pour des chaudières ou encore des tubes pour fours de chimie ou de pétrochimie.

TECHNIQUE EN RAPPORT

De tels produits sont le plus souvent des tubes sans soudure obtenus après une sévère opération de déformation plastique à chaud de barres pleines et sont réalisés dans des aciers très particuliers.

Au-delà des aciers ferritiques à 2,25 % Cr - 1 % Mo du type T22 selon ASTM A213, on connaît depuis longtemps pour de tels usages les tubes en acier inoxydable austénitique du type TP321H, TP347H selon ASTM A213 (ASTM = American Society for Testing and Materials) qui contiennent environ 0,05 %C, 18 % Cr, 11 % Ni et sont stabilisés respectivement au Ti ou au Nb.

Ces aciers sont très résistants à la corrosion par la vapeur du fait de leur teneur en chrome et possèdent une résistance très élevée à la rupture par fluage jusqu'à 700°C du fait de leur structure austénitique.

Ils possèdent par contre de gros inconvénients liés à leur structure austénitique qui les rend peu compatibles avec les aciers à structure ferritique ou martensitique, lesquels sont forcément utilisés dans d'autres parties de la chaudière moins exposées à la température ; d'où l'importance des recherches sur de nouveaux matériaux à structure ferritique ou martensitique.

On connaît ainsi pour les usages à haute température les tubes en acier T91 selon la spécification ASTM A213 (généralement utilisée pour les petits tubes de surchauffeurs) ou en acier P91 selon la spécification ASTM A335 (généralement utilisée pour les plus gros tubes de collecteur ou de conduite de vapeur surchauffée) ; ces nuances contiennent 0,1 % C, 9 % Cr, 1 % Mo, 0,2 % V, 0,08 % Nb et 0,05 % N et présentent une contrainte à rupture par fluage en $10^5$ h à 600°C ($\sigma_{R\ 10^5\ h\ 600°\ C}$) de 98 M Pa.

L'acier T92 selon spécification ASTM A213 (ou P92 selon spécification ASTM A335) possède une composition chimique voisine des T91/P91, sauf que sa teneur en Mo est très réduite et qu'il contient 1,8 % W et une micro addition de bore; la résistance à la rupture par fluage $\sigma_{R\ 10^5\ h\ 600°\ C}$ de cet acier est de l'ordre de 120 MPa.

Ces aciers T91, P91, T92, P92 contiennent 9 % Cr et certains de leurs utilisateurs pensent qu'une telle teneur en Cr est insuffisante pour résister à l'oxydation à chaud et/ou à la corrosion par la vapeur d'eau au-delà de 600°C, notamment à 650°C compte tenu de la température de métal envisagée pour les tubes de surchauffeurs de centrales thermiques futures.

Il est sûr que la présence d'une couche d'oxyde en surface intérieure de tubes de surchauffeurs, couche provenant de la corrosion de l'acier par la vapeur circulant dans ces tubes, crée une résistance thermique qui augmente avec l'épaisseur de cette couche et qui entraîne à flux thermique constant une augmentation de la température moyenne des tubes donc une diminution importante de leur durée de vie.

En outre, l'écaillage de cette couche lorsqu'elle est trop importante peut conduire à des accumulations de débris dans les cintres de surchauffeurs entravant la circulation de la vapeur avec un risque supplémentaire de surchauffe des tubes. L'écaillage peut également conduire à des entraînements de débris dans la turbine et donc à des détériorations des aubes de celle-ci.

On connaît par ailleurs l'acier X20CrMoV12-1 (en abrégé X20) selon la norme allemande DIN 17175 qui contient 0,20 % C, 11 à 12 % Cr, 1 % Mo et 0,2 % V.

Cet acier est censé être plus résistant à l'oxydation à chaud que les T91 ou T92 du fait de sa teneur en Cr mais il est beaucoup moins résistant à la rupture par fluage que les T91/P91 et il est difficile à souder, notamment en fortes épaisseurs.

Il serait donc avantageux de modifier l'acier T92/P92 dont la résistance au fluage est satisfaisante mais dont la résistance à l'oxydation à chaud est insuffisant en augmentant sa teneur en Cr à 12 % Cr mais une telle augmentation se heurte à l'apparition dans la structure de ferrite δ néfaste pour la transformation de l'acier (forgeabilité), pour la tenacité et pour la résistance au fluage.

L'augmentation de la teneur en Cr dans l'acier X20 est compensée par une teneur en C plus élevée (0,20 % contre 0,10 %) et par une addition modérée de Ni (entre 0,5 et 1 %).

Une teneur en C supérieure ou égale à 0,20 % apparaît peu souhaitable pour la soudabilité. Une addition importante de Ni offre quant à elle l'inconvénient d'abaisser fortement le point Ac1 et donc de limiter la température maximale de revenu des tubes ; elle semble également être néfaste pour la résistance à la rupture par fluage.

Le brevet US 5069870 divulgue l'addition de Cu (élément gammagène) à des teneurs allant de 0,4 % jusqu'à 3 % sur un acier à 12 % Cr pour compenser l'augmentation de teneur en Cr. Mais l'addition de Cu pose des problèmes de forgeabilité pour les fabrications de tubes de surchauffeurs par laminage à chaud.

Une nuance à 11 % Cr, 1,8 %W, 1 % Cu et micro-alliée aux V, Nb et N avec les mêmes inconvénients est reprise dans les ASTM A213 et A335 sous les dénominations T122, P122.

La demande de brevet JP 4371551 divulgue une addition de Co (également gammagène) entre 1 et 5 % (et généralement de plus de 2 %) sur un acier contenant 0,1 % C, 8 à 13 % Cr, 1 à 4 % W, 0,5 à 1,5 % Mo, moins de 0,20 % Si (et en fait moins de 0,11 % Si) et micro-allié au V, Nb, N et B pour obtenir une résistance à la rupture par fluage très élevée et une résilience à l'essai Charpy V suffisante après vieillissement. Un tel acier est cependant généralement cher à produire.

Il en est de même pour les aciers décrits dans les demandes de brevet EP 759 499, EP 828 010, JP 9 184 048 et JP 8 333 657 qui contiennent plus de 2 % Co et de préférence au moins 3 %.

La demande de brevet EP 892 079 prévoit également une addition de Co à des teneurs allant de 0,2 à 5 % mais dans un acier contenant moins de 10 % Cr qui ne répond pas au problème exposé ci-avant.

Les demandes de brevet JP 11 061 342 et EP 867 523 prévoient également une addition de Co mais conjointement avec une addition de Cu pour le premier document et d'au moins 1 % Ni pour le second document. Or, on a exposé ci-avant les inconvénients inacceptables de telles additions.

La demande de brevet EP 758 025 prévoit aussi une addition de Co, généralement à des teneurs très élevées ; de ce fait, pour empêcher la formation de précipités intermétalliques à base de Cr, Mo, Co, W, C et Fe, ce document prévoit conjointement l'addition de (Ti ou Zr) et d'alcalino-terreux (Ca, Mg, Ba) ou de terres rares (Y, Ce, La).

L'addition de Ti ou Zr possède cependant l'inconvénient majeur de former des nitrures grossiers avec l'azote de l'acier et d'empêcher la formation de carbonitrures ultrafins de V et Nb responsables de la résistance élevée au fluage.

La demande de brevet JP 8 187 592 prévoit aussi une addition de Co avec une relation particulière entre les teneurs en (Mo + W) et celles en (Ni + Co + Cu) mais ces additions et relations sont prévues pour optimiser la composition de matériaux d'apport pour soudure, lesquels ne sont pas prévus pour supporter une mise en forme telle que celle lors de la fabrication de tubes sans soudure (caractéristiques de forgeabilité).

La demande de brevet JP 8 225 833 prévoit aussi une addition de Co mais concerne un traitement thermique pour diminuer la teneur en austénite résiduelle et non une composition chimique ; les fourchettes de composition chimique sont de ce fait larges et on ne peut en déduire d'enseignement pour l'usage visé.

EXPOSE DE L'INVENTION

On a cherché par la présente invention à réaliser un acier :

- dont la résistance au fluage à 600° et 650°C soit au moins équivalente à celle de l'acier T92/P92 ;
- dont la résistance à l'oxydation à chaud et à la corrosion par la vapeur d'eau soit au moins égale à celle de l'acier X20CrMoV12-1 ;
- occasionnant un coût inférieur de production de tubes sans soudure par rapport à des nuances améliorées qui ont été citées précédemment, le coût de production étant affecté non seulement par celui des éléments d'addition mais aussi par celui de la transformation en tubes sans soudure.

On a aussi cherché à ce que l'acier selon l'invention permette la fabrication des tubes sans soudure de petit ou gros diamètre, par divers procédés connus de laminage à chaud, tels que par exemple les procédés Stiefel, MPM, à pas de pèlerin, par banc poussant, par laminage continu avec réducteur-tireur, par laminage Axel, par laminage planétaire.

Selon l'invention, l'acier considéré contient en poids :

C :     0,06 à 0,20 %
Si :    0,10 à 1,00 %
Mn :    0,10 à 1,00 %
S :     inférieur ou égal à 0,010 %
Cr :    10,00 à 13,00 %
Ni :    inférieur ou égal à 1,00 %
W :     1,00 à 1,80 %
Mo :    tel que (W/2+Mo) est inférieur ou égal à 1,50 %
Co :    0,50 à 2,00 %

V : 0,15 à 0,35 %
Nb : 0,030 à 0,150 %
N : 0,030 à 0,12 %
B : 0,0010 à 0,0100 %

ainsi qu'optionnellement au plus 0,050 % en poids d'Al et au plus 0,0100 % en poids de Ca.

Le reste de la composition chimique de cet acier est constitué de fer et des impuretés résultant des procédés d'élaboration de l'acier.

Préférentiellement, les teneurs en constituants de la composition chimique sont reliées entre elles pour que l'acier après traitement thermique de normalisation entre 1050 et 1080° C et revenu possède une structure martensitique revenue exempte ou quasiment exempte de ferrite δ.

L'influence des éléments de la composition chimique sur les propriétés de l'acier est la suivante.

CARBONE :

A haute température, notamment lors de processus de fabrication à chaud de produits métallurgiques ou durant l'austénitisation du traitement thermique final, cet élément stabilise l'austénite et tend par conséquent à réduire la formation de ferrite δ.

A température ambiante ou de service, le carbone est sous forme de carbures ou de carbonitrures dont la répartition initiale et l'évolution de cette répartition dans le temps agissent sur les caractéristiques mécaniques à l'ambiante et à température de service.

Une teneur en C inférieure à 0,06 % permet difficilement d'obtenir une structure exempte de ferrite δ et les caractéristiques de fluage recherchées.

Une teneur en C supérieure à 0,20 % est néfaste pour la soudabilité de l'acier.

Une fourchette de teneur 0,10 - 0,15 % est préférée.

SILICIUM:

Cet élément est un élément désoxydant de l'acier liquide qui limite par ailleurs la cinétique d'oxydation à chaud par l'air ou par la vapeur d'eau, notamment d'après les inventeurs, en synergie avec la teneur en chrome.

Une teneur inférieure à 0,10 % en Si est insuffisante pour obtenir ces effets.

Le Si est par contre un élément alphagène qu'il faut limiter pour éviter la formation de ferrite δ et il tend en outre à favoriser les précipitations fragilisantes en service. Sa teneur a pour cela été limitée à 1,00 %.

Une fourchette préférentielle va de 0,20 à 0,60 %.

MANGANÈSE:

Cet élément favorise la désoxydation et fixe le soufre. Il réduit en outre la formation de ferrite δ.

A une teneur supérieure à 1,00 %, il réduit par contre la résistance à la rupture par fluage.

Une fourchette préférentielle va de 0,15 à 0,50 %.

SOUFRE :

Cet élément forme essentiellement des sulfures qui réduisent la résilience en sens travers et la forgeabilité.

Une teneur en S limitée à 0,010 % permet d'éviter la formation de défauts lors du perçage à chaud de billettes lors du processus de fabrication de tubes sans soudure.

Une teneur la plus basse possible, par exemple inférieure ou égale à 0,005 %, voire à 0,003 % est préférée.

CHROME :

Cet élément se trouve à la fois dissous dans la matrice de l'acier et précipité sous forme de carbures.

Une teneur minimale en Cr de 10 % et préférentiellement de 11 %, est nécessaire pour la tenue à l'oxydation à chaud.

Compte tenu du caractère alphagène du chrome, une teneur supérieure à 13 % permet difficilement d'éviter la présence de ferrite δ.

NICKEL :

Il favorise la résilience et empêche la formation de ferrite δ, mais diminue fortement la température Ac1 et diminue donc la température maximale de revenu de l'acier.

Une teneur supérieure à 1 % n'est donc pas souhaitable, d'autant plus que le nickel tend à réduire la résistance à la rupture par fluage.

On préférera limiter la teneur maximale en Ni à 0,50 %.

TUNGSTÈNE :

Cet élément qui est à la fois dissous et précipité sous forme de carbures et de phases intermétalliques est fondamental pour la tenue au fluage à 600° C et au-dessus, d'où une teneur minimale de 1,00 %.

Mais cet élément est cher, fortement ségrégeant et alphagène et tend à former des phases intermétalliques fragilisantes.

Les inventeurs ont trouvé qu'il n'était pas judicieux d'augmenter la teneur en W au-delà de 1,80 %.

MOLYBDÈNE :

Cet élément a un effet similaire au tungstène même s'il apparaît moins efficace pour la résistance au fluage.

Ses effets s'ajoutant à ceux du tungstène, la teneur en (W/2+Mo) a été avantageusement limitée à 1,50 %.

La teneur en molybdène est préférentiellement inférieure ou égale à 0,50 %.

COBALT :

Cet élément stabilise l'austénite et permet donc de tolérer plus de 10 % de Cr et il améliore aussi les propriétés de résistance au fluage ; une teneur minimale de 0,50 % est donc recherchée.

Par contre, cet élément contribue à entrer dans des composés intermétalliques fragilisants susceptibles de précipiter à la température de service et il est en outre très coûteux.

Jusqu'à présent, cet élément a surtout été utilisé à des teneurs supérieures à 2 % dans les matériaux pour usage considéré à haute température pour améliorer leur résistance à la rupture par fluage.

Les inventeurs de la présente invention ont constaté avec surprise que la plage de teneur en cobalt de 0,50 à 2,00 % et préférentiellement de 1,00 à 1,50 % permettait de tenir les objectifs visés pour cet acier et notamment un compromis optimal de différentes caractéristiques éventuellement contradictoires (par exemple, résistance à l'oxydation, résistance au fluage et forgeabilité), avec une métallurgie relativement simple et un coût de fabrication limité des produits métallurgiques.

Ce n'est pas le cas avec les aciers contenant plus de 2 % de Co qui ont été jusqu'à présent mis en avant.

VANADIUM :

Cet élément forme des nitrures et des carbonitrures très fins et stables et donc très importants pour la résistance à la rupture par fluage.

Une teneur inférieure à 0,15 % est insuffisante pour obtenir le résultat recherché.

Une teneur supérieure à 0,35 % est néfaste vis-à-vis du risque d'apparition de ferrite $\delta$.

Une fourchette préférentielle va de 0,20 à 0,30 %.

NIOBIUM :

Comme le vanadium, cet élément forme des carbonitrures stables et son addition renforce la stabilité des composés de vanadium.

Une teneur en Nb inférieure à 0,030 % est insuffisante pour ce faire.

Une teneur en Nb supérieure à 0,15 % est défavorable, les carbonitrures de Nb pouvant alors avoir une taille excessive et réduire la résistance au fluage.

Une fourchette préférentielle va de 0,050 à 0,100 %.

AZOTE:

Cet élément gammagène permet de réduire l'apparition de ferrite $\delta$.

Il permet aussi et surtout de former des nitrures et carbonitrures très fins et beaucoup plus stables que les carbures correspondants.

Une teneur minimale en azote de 0,030 % est donc exigée.

Une teneur en azote supérieure à 0,120 % conduit sur les aciers considérés à des soufflures sur les lingots, les billettes ou les brames et par conséquent à des défauts sur les produits métallurgiques. Le même risque existe au moment du soudage de mise en oeuvre de ces produits.

Une fourchette de teneur en azote de 0,040 % à 0,100 % est préférée.

BORE :

Cet élément contribue à stabiliser les carbures lorsqu'il est ajouté à plus de 0,0010 %.

Une teneur supérieure à 0,0100 % peut par contre diminuer fortement la température de brûlure des produits notamment bruts de coulée et apparaît donc défavorable.

ALUMINIUM :

Cet élément n'est pas nécessaire en soi pour obtenir les caractéristiques métallurgiques souhaitées et il est ici considéré comme résiduel d'élaboration ; son addition est donc laissée optionnelle.

C'est un puissant désoxydant du métal et du laitier d'élaboration et il permet de ce fait une désulfuration rapide et poussée de l'acier par échange métal-laitier.

Cet élément étant également alphagène et avide d'azote, des teneurs en Al supérieures à 0,050 % sont défavorables. Selon les besoins, on pourra si nécessaire ajouter l'aluminium pour obtenir une teneur finale pouvant aller jusqu'à 0,050 %.

CALCIUM

Une teneur en Ca ou en Mg inférieure à 0,0010 % résulte d'échanges entre acier liquide et laitier d'élaboration contenant de la chaux ou de la magnésie en milieu très désoxydé : ce sont donc des résiduels inévitables d'élaboration.

Le calcium peut toutefois être optionnellement ajouté à des teneurs un peu supérieures à 0,0010 % pour améliorer la coulabilité et/ou contrôler la forme des oxydes et des sulfures.

Une teneur en Ca supérieure à 0,0100 % dénote un acier riche en oxygène et par conséquent sale et est donc défavorable.

AUTRES ELEMENTS:

Hormis le fer qui est le constituant de base de l'acier et les éléments précédemment indiqués, l'acier selon l'invention ne contient comme autres éléments que des impuretés telles que, par exemple, le phosphore ou l'oxygène et des résiduels provenant notamment des ferrailles enfournées pour élaborer l'acier ou provenant des échanges avec le laitier ou les réfractaires ou nécessaires aux procédés d'élaboration et de coulée.

Des teneurs en Ti ou Zr inférieures à 0,010 % résultent ainsi des ferrailles enfournées et non d'addition volontaire ; des teneurs aussi basses n'ont d'ailleurs pas d'effet sensible sur l'acier pour l'usage considéré.

On veillera préférentiellement pour la forgeabilité à ce que la teneur en cuivre (résultant aussi des ferrailles enfournées et non d'addition volontaire) reste inférieure à 0,25 % et optionnellement inférieure à 0,10 %. Des teneurs supérieures à ces teneurs peuvent proscrire certains procédés de laminage à chaud de tubes sans soudure et obliger à utiliser des procédés plus coûteux de filage au verre.

RELATION COMPOSITION CHIMIQUE ET TENEUR EN FERRITE δ:

Les aciéristes savent équilibrer la composition chimique d'un acier contenant environ 12 % Cr en visant une absence ou une quasi-absence de ferrite δ après traitement thermique à partir d'une relation entre les teneurs des éléments de la composition chimique. Par structure quasiment exempte de ferrite δ, on entend une structure ne contenant pas plus de 2 % de ferrite δ et préférentiellement pas plus de 1 % de ferrite δ (mesurée avec une précision absolue de ±1 %).

Un exemple d'une telle relation est donné plus loin mais on pourra utiliser toute relation connue publiquement ou non connue publiquement pourvu qu'elle conduise à l'effet recherché.

On connaît par exemple le diagramme de Shaeffler ou les diagrammes dérivés de celui-ci qui incorporent notamment l'influence de l'azote (diagramme de De Long) ainsi que le paramètre Md issu de travaux sur les orbitales électroniques mentionné par Ezaki et al. (Tetsu-to-Hagane, 78 (1992) 594).

DESCRIPTION SOMMAIRE DES DESSINS

Les figures ci-après illustrent un exemple non limitatif de mode de réalisation de l'invention.

La figure 1 représente un diagramme teneur en ferrite δ - teneur en chrome équivalent pour différents échantillons en aciers contenant 8 à 13 % Cr traités thermiquement.

La figure 2 représente un diagramme de résultats d'essais de forgeabilité sur l'acier F selon l'invention comparativement à d'autres aciers.

La figure 3 représente pour le même acier F comparativement à d'autres aciers un diagramme de résultats d'essais de traction à chaud, la figure 3 a) étant relative à la limite d'élasticité et la figure 3 b) à la résistance à la rupture.

La figure 4 représente pour le même acier F comparativement à d'autres aciers une courbe de transition de la résilience Charpy V.

La figure 5 représente pour le même acier F comparativement à d'autres aciers une courbe de résultats d'essais de rupture par fluage sous charge unitaire constante.

La figure 6 représente pour le même acier F comparativement à d'autres aciers une courbe maîtresse de résultats d'essais de rupture par fluage sous différentes charges en fonction du paramètre de Larson-Miller.

MODES DE RÉALISATION DE L'INVENTION:

1er EXEMPLE : essais sur coulée expérimentale

Une coulée de laboratoire de 100 kg en acier selon l'invention a été élaborée sous vide (repère F).

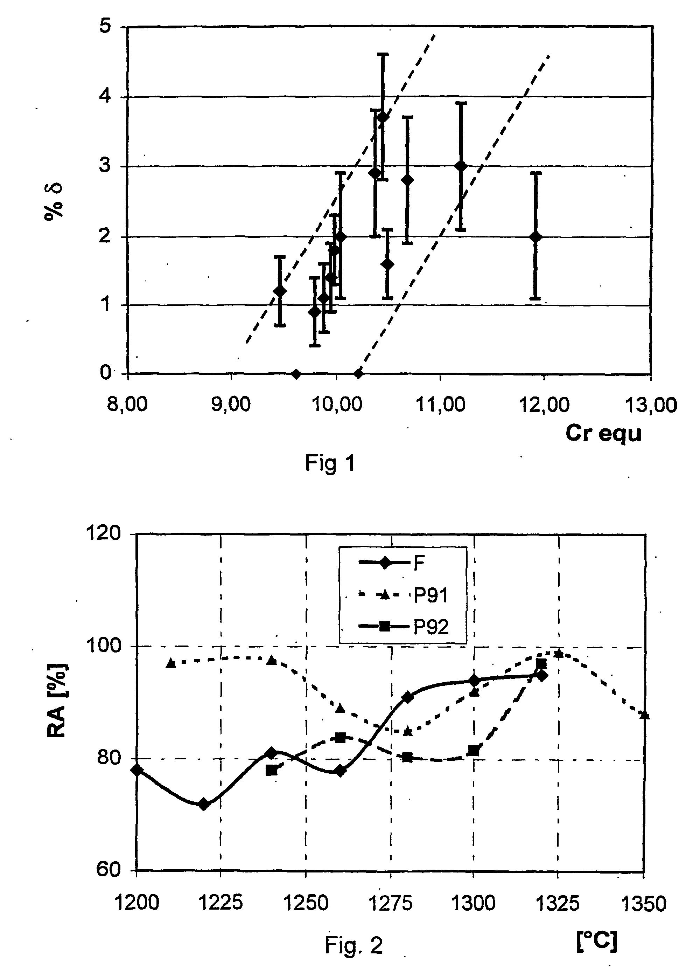

La figure 1 représente la relation entre un paramètre chrome équivalent ($Cr_{equ.}$) issu de la composition chimique et la teneur en ferrite δ:

$$Cr_{equ} = Cr +6Si +4Mo +1,5W +11V +5Nb +8Ti -40C -30N -2Mn -4Ni -2Co -Cu$$

Le paramètre $Cr_{equ}$ est issu des travaux de Patriarca et al. (Nuclear Technology, 28 (1976) p. 516).
Sur la figure 1, nous avons fait figurer la teneur en ferrite δ mesurée par analyse d'image au microscope optique sur un certain nombre de coulées en T91, P91, T92 et X20 en fonction du paramètre $Cr_{equ}$.
Cette figure 1 a permis de déterminer la visée analytique de la coulée F à l'intérieur des plages de teneurs des éléments de la composition chimique définies par la revendication 1. On a ainsi visé à obtenir une teneur $Cr_{equ}$ inférieure ou égale à 10,5 % et si possible inférieure ou égale à 10,0 % de manière à chercher à obtenir une teneur quasiment exempte de ferrite δ (inférieure à 2 % et préférentiellement inférieure à 1 %) après traitement thermique.

| type d'acier | nuance | C | Si | Mn | P | S | Cr | Ni | W | Mo |
|---|---|---|---|---|---|---|---|---|---|---|
| selon l'invention | F | 0,12 | 0,48 | 0,22 | 0,013 | 0,002 | 11,50 | 0,23 | 1,38 | 0,29 |
| aciers | P91 | 0,10 | 0,30 | 0,40 | 0,015 | 0,002 | 9,00 | 0,15 | - | 1,00 |
| comparatifs | X20 | 0,20 | 0,30 | 0,45 | 0,020 | 0,002 | 11,50 | 0,60 | - | 1,00 |
| (analyse | P92 | 0,10 | 0,30 | 0,40 | 0,015 | 0,002 | 9,00 | 0,15 | 1,50 | 0,40 |
| moyenne) | P122 | 0,10 | 0,20 | 0,50 | 0,015 | 0,002 | 11,00 | 0,30 | 1.90 | 0,40 |

| type d'acier | nuance | Co | V | Nb | N | B | Al | Cu | $Cr_{equ}$ |
|---|---|---|---|---|---|---|---|---|---|
| selon l'invention | F | 1,37 | 0,24 | 0,060 | 0,056 | 0,0030 | | 0,10 | 9,9 |
| aciers | P91 | - | 0,22 | 0,080 | 0,050 | - | 0,02 | 0,20 | 10,7 |
| comparatifs | X20 | - | 0,30 | - | 0,020 | - | 0,02 | 0,20 | 8,7 |
| | P92 | - | 0,22 | 0,080 | 0,050 | 0,0030 | 0,02 | 0,20 | 10,6 |
| | P122 | - | 0,22 | 0,050 | 0,050 | 0,0020 | 0,02 | 0,80 | 10,8 |

**Tableau 1: composition chimique (en % en poids).**

Le tableau 1 fournit la composition chimique de cette coulée F et la composition chimique moyenne de nuances connues de l'état de la technique (% en poids) ainsi que la valeur correspondante du paramètre $Cr_{equ}$.

Cette coulée F ne comporte pas d'addition de Ca et sa teneur en Al est inférieure à 0,010 % (Al et Ca résiduels d'élaboration).

Les lingots obtenus ont été réchauffés à 1250°C puis laminés à chaud en tôle d'épaisseur 20 mm qui a ensuite fait l'objet d'un revenu de détensionnement.

Les échantillons pour essais et examens décrits ci-après sont issus de cette tôle.

Un échantillon métallographique prélevé en sens long de cette tôle a tout d'abord été examiné au microscope optique après attaque métallographique au réactif de Villela.

La présence de ferrite δ est observée sous forme de courts filaments blancs dans les zones ségrégées en éléments alphagènes (Cr, W, Mo...). Sa teneur a été appréciée par analyse automatique d'images à 0,50 %, soit une teneur quasiment nulle.

Des échantillons ont ensuite été prélevés dans le sens travers pour effectuer des essais de forgeabilité par traction à chaud à une vitesse moyenne de déformation de 1 s⁻¹.

Les essais de forgeabilité ont été effectués comparativement sur ces échantillons de la coulée F et sur des échantillons issus d'une barre laminée de diamètre 310 mm en acier P91 et d'une barre laminée de diamètre 230 mm en acier P92.

La figure 2 montre les résultats de striction à rupture qui ont été obtenus.

On constate que la striction à rupture reste supérieure à 70 % de 1200° à 1320° C et est comparable à celle d'un P92.

Un tel comportement est à mettre au compte de la basse teneur en soufre de la coulée F et d'une teneur relativement faible en ferrite δ à ces températures.

On a d'ailleurs vérifié par essais métallographiques l'influence de la température sur la teneur en ferrite δ : voir tableau 2.

Tableau 2 :

| évolution de la teneur en ferrite δ à haute température. | | | | | | |
|---|---|---|---|---|---|---|
| Température | 1200°C | 1220°C | 1240°C | 1260°C | 1280°C | 1300°C |
| % ferrite δ | 5% | 6% | 9% | 14% | 16% | 22% |

Les valeurs de teneur en ferrite δ obtenues sont comparables à celles mesurées dans les mêmes conditions sur aciers comparatifs P91, P92.

La teneur en ferrite δ est inférieure à 15 % jusqu'à 1250°C et inférieur à 20 % jusqu'à 1280°C.

La teneur limitée en ferrite δ sur la coulée F à haute température résulte vraisemblablement de l'absence maîtrisée de ferrite δ à température ambiante.

La température de brûlure est par ailleurs supérieure à 1320°C.

On peut donc s'attendre à un comportement satisfaisant du matériau F lors d'un perçage à chaud de barres rondes (dites ronds à tubes) entre cylindres selon le procédé Mannesmann si on limite le chauffage des ronds à moins de 1300°C et si possible à 1250°C.

Des tubes sans soudure devraient donc pouvoir être produits par de nombreux procédés productifs de laminage à chaud, donc pouvoir être produits à coût relativement bas. Il n'en est pas de même pour les tubes en nuances austénitiques ou en nuances contenant 12 % Cr et 1% de Cu qui nécessitent, au moins pour les tubes de faible diamètre du genre des tubes de surchauffeurs, d'être produits de manière moins productive par filage au verre.

Des échantillons dilatométriques ont ensuite été prélevés sur l'acier F selon l'invention et les points de transformation de l'acier au chauffage (Ac1, Ac3) et au refroidissement (Ms, Mf) ont été déterminés par dilatométrie.

Le tableau 3 montre les résultats obtenus comparativement à des résultats typiques sur des aciers connus.

Tableau 3 :

| points de transformation de phases. | | | | |
|---|---|---|---|---|
| Grade | Ac3[°C] | Ac1[°C] | Ms[°C] | Mf[°C] |
| T/P91 | 915 | 820 | 450 | 190 |
| T/P92 | 910 | 830 | 470 | 200 |
| T/P122 | 905 | 805 | 350 | |
| X20 | 965 | 800 | 320 | |
| Acier F (présente invention) | 940 | 830 | 350 | 130 |

La température Ac1 de 830° C pour l'acier F est comparable à celle des P91 et P92 et notablement plus élevée que celle du P122 au Cuivre qui ne permet pas une température de revenu supérieure à 780° C. Un revenu à 800° C est au contraire tout à fait possible sur l'acier F selon l'invention.

Les températures Ms et Mf de début et fin de transformation martensitique restent suffisamment élevées pour que la transformation de l'austénite en martensite soit complète lors du retour à température ambiante.

La microstructure et la dureté ont été mesurées après traitement thermique de normalisation durant 20 mn à 1060° C (traitement N1) ou 1080° C (traitement N2) ; les résultats figurent au tableau 4.

Tableau 4 :

| résultats après traitement thermique de normalisation. | | | |
|---|---|---|---|
| | | microstructure | dureté HV10 |
| présente invention (F) | traitement N1 | martensite (<0,5 % ferrite δ) | 420 |
| | traitement N2 | martensite (0,5 % ferrite δ) | 410 |
| acier comparatif P92 | | martensite (<0,5 % ferrite δ) | 425 |

La microstructure et la dureté ont également été mesurées après traitement thermique de normalisation N1 et revenu durant 1 heure à 780° C (T1), 30 mn à 800° C (T2) ou 1 heure à 800° C (T3) : voir résultats au tableau 5.

Tableau 5 :

| résultats après normalisation et revenu. | | | |
|---|---|---|---|
| | | Microstructure (taille de grains γ en mm) | dureté HV$_{10}$ |
| présente invention (F) | N1 +T1 | 100 % de martensite revenue (grains γ 0,022 mm) | 255 |
| | N1 + T2 | 100 % de martensite revenue (grains γ 0,022 mm) | 236 |
| | N1 + T3 | 100 % de martensite revenue (grains γ 0,022 mm) | 236 |

Tableau 5 :   (suite)

| résultats après normalisation et revenu. | | |
|---|---|---|
| | **Microstructure (taille de grains $\gamma$ en mm)** | **dureté $HV_{10}$** |
| acier comparatif T92 | 100 % de martensite revenue (grains $\gamma$ 0,010 mm) | 220 |

On notera une taille fine des grains austénitiques dont la dimension n'excède pas 0,030 mm.

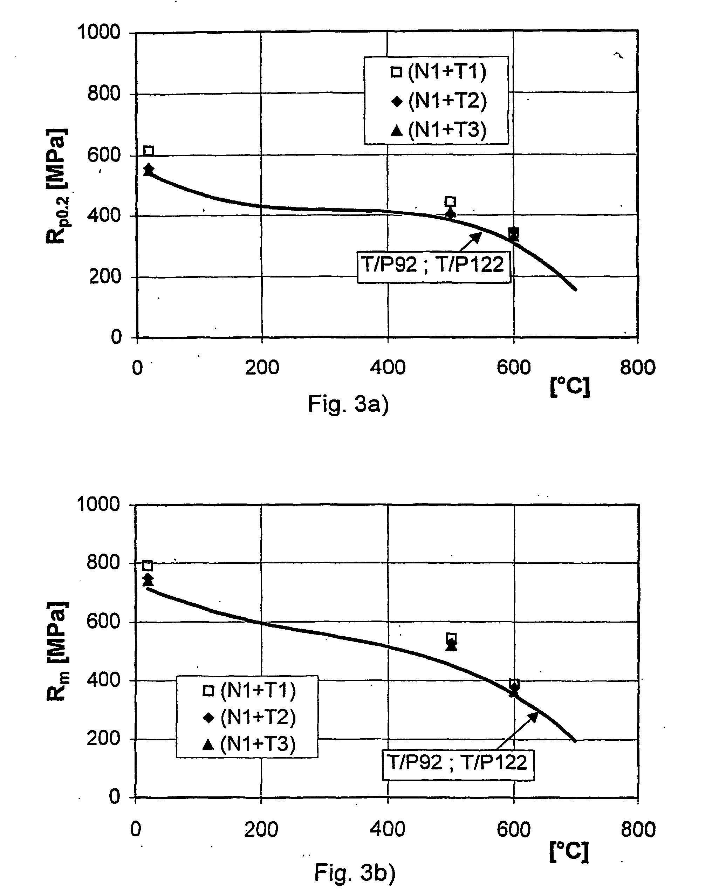

Les caractéristiques mécaniques de traction ont été ensuite évaluées à température ambiante ainsi qu'à 500 et 600° C = voir résultats au tableau 6 et aux figures 3a et 3b.

Les caractéristiques de résilience Charpy V ont ensuite été mesurées en sens long à des températures d'essais allant de -60° à +40° C après traitements thermiques N1+T1, N1+T2 ou N1+T3.

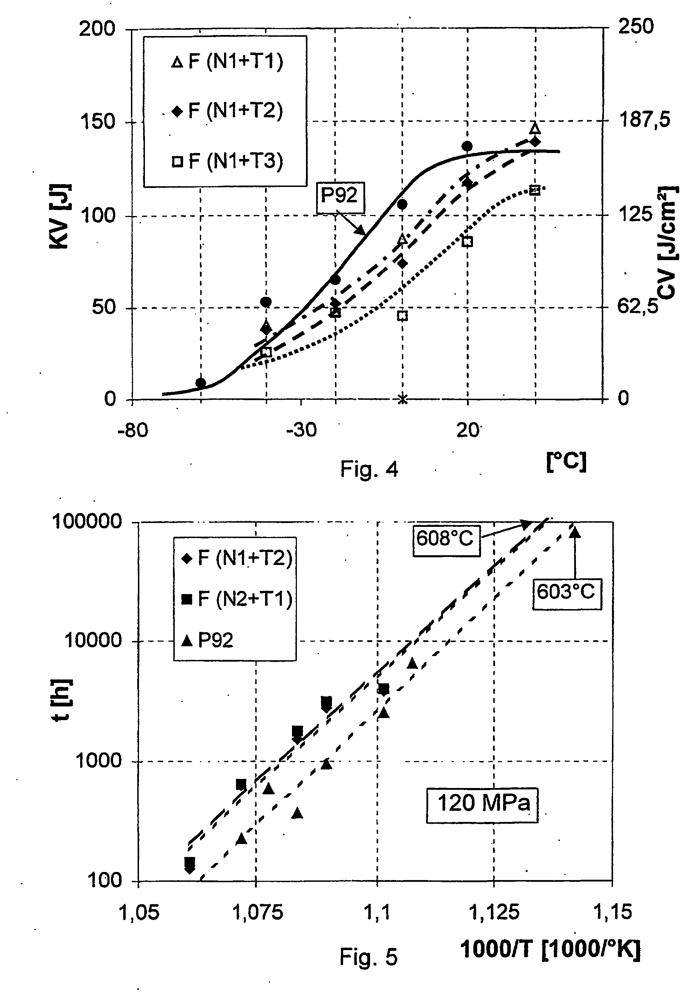

Les résultats obtenus ainsi que ceux sur un tube de diamètre extérieur 356 mm et d'épaisseur 40 mm en P92 sont illustrés à la figure 4. La température de transition de la résilience Charpy V est d'environ 0° C pour la coulée F comme pour les tubes P92.

Tableau 6 :

| caractéristiques de traction à l'ambiante. | | | | |
|---|---|---|---|---|
| | | Rm (MPa) | Rp0,2 (MPa) | A5,65 $\sqrt{s}$ (%) |
| présente invention (F) | N1 + T1 | 790 | 615 | 21 |
| | N1 + T2 | 749 | 559 | 25 |
| | N1 + T3 | 739 | 551 | 24 |
| acier comparatif P92 | | 700 | 540 | 23 |

Les caractéristiques de rupture par fluage ont ensuite été déterminées par différents essais à différentes températures sous charge unitaire constante (140 et 120 MPa) comparativement sur l'acier F de la présente invention (traitements thermiques N1+T2 ou N2+T2) et sur un tube en P92.

Les résultats de durée d'essai à rupture sous 120 MPa sont illustrés à la figure 5 en fonction du paramètre 1000/T (en ° $K^{-1}$) classiquement utilisé pour ce type de nuance. Les températures ont été choisies pour que la durée maximale d'essai avoisine 4000 h. La figure 5 permet d'extrapoler pour la charge unitaire d'essais la température correspondant à une durée d'essais de $10^5$ h. On constate que cette température est pour l'acier F au moins égale sinon supérieure à celle de l'acier P92.

D'autres essais de rupture par fluage à température constante ont aussi été effectués ou sont en cours d'essais à 600°C, 625°C, 650°C.

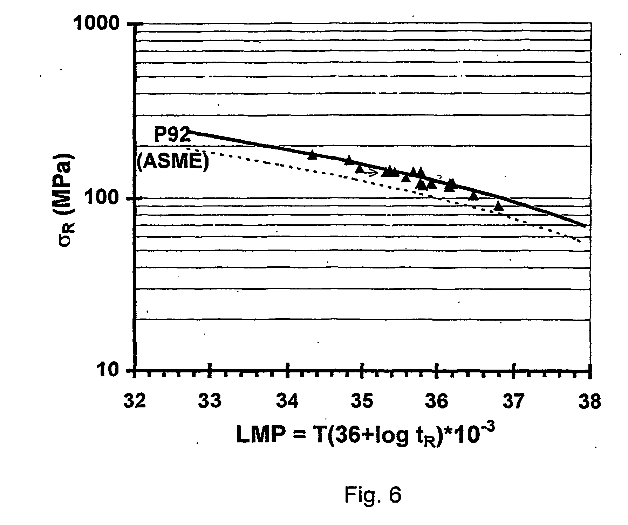

Les résultats de ces essais (ainsi que ceux sous charge unitaire constante) ont été reportés sur la figure 6 sous forme d'un diagramme (courbe maîtresse) donnant log $\sigma_R$ en fonction du paramètre de Larson-Miller LMP lequel combine la durée et la température d'essai : LMP = $10^{-3}$.T.(c+log $t_R$) avec c=36 et T et $t_R$ respectivement exprimés en °K et en heures. Les essais rompus atteignent une durée de 7800 h à 600°C, 10000h à 610°C, 7800 h à 625°C et 7200 h à 650°C ; sur le diagramme figure également avec une flèche un essai à 600°C non encore rompu après 11000 h.

On constate sur la figure 6 que l'ensemble des essais se présente favorablement par rapport à la courbe maîtresse moyenne (trait plein) et à la demi-bande inférieure de dispersion (pointillés) des aciers T92 et P92 définie par l'ASME.

Des essais d'oxydation à chaud dans la vapeur d'eau ont été entrepris sur produit F à l'état N1+T2 à 600° et 650°C pendant des durées allant jusqu'à 5000 heures comparativement à différents aciers pour usage à haute température selon ASTM A213 ou selon DIN 17175 :

- T22, T23 à faible teneur en Cr (2,25%),
- T91, T92 à 9% Cr,
- X20, T122 à environ 11% Cr,
- TP347H (nuance austénitique à 18% Cr-10% Ni-Nb).

Des résultats intermédiaires de gain de masse mesuré par pesée après 1344 h (8 semaines) figurent au tableau 7.

Les résultats ont été codés de la manière suivante :

- 1 : gain de masse inférieur ou égal à 2 mg/cm2 ;
- 2 : gain de masse compris entre 2 et 5 mg/cm2 ;
- 3 : gain de masse compris entre 5 et 10 mg/cm2 ;
- 4 : gain de masse compris entre 10 et 50 mg/cm2 ;
- 5 : gain de masse supérieur à 50 mg/cm2.

Les échantillons en X20 n'ont pu faire l'objet de mesures à cause d'une importante exfoliation des couches d'oxyde à la sortie des fours ou lors des pesées (résultats indiqués NA dans le tableau). Au contraire les échantillons de la coulée F et sur TP 347H ont montré une absence d'écaillage des couches d'oxyde. On a en outre noté une fine cristallisation des produits d'oxydation sur la coulée F.

Ces résultats intermédiaires laissent présager, notamment à 650°C, un comportement à l'oxydation par la vapeur d'eau de la coulée F selon l'invention conforme aux attentes, à savoir une tenue meilleure que celle des P91, P92 et au moins équivalente à celle de l'X20, voire se rapprochant de celle du TP347H.

Tableau 7 :

| résultats d'essais d'oxydation à chaud au bout de 1344 h. | | | |
|---|---|---|---|
| Type d'acier | Nuance | Code de gain de masse | |
| | | 600°C | 650°C |
| Présente invention | F | 2 | 2 |
| Aciers comparatifs | T22 (2,25Cr-1Mo) | 4 | 5 |
| | T23 (2,25Cr-1,5W-V-Nb-Ti) | 4 | 5 |
| | T91 (9Cr-1Mo-V-Nb-N) | 3 | 4 |
| | T92 (9Cr-1,8W-V-Nb-N) | 3 | 4 |
| | T122 (11Cr-1,8W-1Cu-V-Nb-N) | 3 | 4 |
| | X20 (11Cr-1Mo-V) | NA | NA |
| | TP347H (18Cr-10Ni-Nb) | 1 | 2 |

Les mêmes échantillons ont été retirés après 5376 h et on a mesuré la perte de masse après décapage des oxydes formés, ce type de mesure étant plus précis que les mesures de gain de masse hors décapage mais ne pouvant être effectués qu'en final.

Le tableau suivant regroupe les valeurs de vitesse de corrosion de l'acier en mm/an déduites de ces mesures.

On retrouve un classement assez similaire à celui du tableau 7.

Les vitesses de corrosion sur X20 et T122 (qui contiennent 11% Cr) ne se détachent pas sensiblement de ceux sur T91 et T92 qui n'en contiennent que 9 %.

Au contraire, de manière très surprenante les vitesses de corrosion sur la nuance F selon l'invention sont extrêmement basses, plus basses même que sur échantillon en acier austénitique 347H contenant 18% Cr et quasiment aussi basses que sur échantillon en acier 347 GF (également austénitique à 18%Cr) qui est une référence pour la tenue à l'oxydation à chaud.

L'acier selon l'invention permet donc de réaliser des chaudières ayant une température de vapeur supérieure à 600°C totalement en aciers ferritiques, y compris pour les parties les plus chaudes.

Tableau 8 :

| vitesse de corrosion | | | |
|---|---|---|---|
| Type d'acier | Nuance | Vitesse de corrosion 600°C | (mm/an) 650°C |
| Présente Invention | F | 0,008 | 0,013 |

Tableau 8 :   (suite)

| vitesse de corrosion | | | |
|---|---|---|---|
| Type d'acier | Nuance | Vitesse de corrosion 600°C | (mm/an) 650°C |
| Aciers Comparatifs | T22 | 0,175 | 1 |
| | T23 | 0,216 | 1,43 |
| | T91 | 0,055 | 0,09 |
| | T92 | 0,070 | 0,10 |
| | T122 | 0,074 | 0,114 |
| | X20 | 0,076 | 0,116 |
| | TP347H | 0,026 | 0,077 |
| | TP347GF(*) | 0,001 | 0,020 |

(*) TP347 GF : variante du TP347H à grains fins.

Il est également à remarquer que les vitesses de corrosion obtenues sur la nuance F sont extrêmement faibles malgré des teneurs en soufre très basses, alors que certains documents de l'état de la technique divulguent pour combattre l'oxydation à chaud des teneurs en soufre modérées, de l'ordre de 0,005 % voire même 0,010 %, et une fixation du soufre par des additions de terres rares et/ou d'alcalino-terreux.

Au contraire, la nuance F selon l'invention se satisfait parfaitement de teneurs en soufre inférieures ou égales à 0,005 %, voire même inférieures ou égales à 0,003 %, et ne nécessite pas d'addition de terres rares et/ou d'alcalino-terreux délicates à mettre en oeuvre.

2ème EXEMPLE : essais sur coulée industrielle

Une coulée industrielle en nuance F selon l'invention a été produite (masse = 20t) et coulée en lingots.

L'analyse de la coulée est la suivante.

| C | Si | Mu | P | S | Cr | Ni | W | Mo |
|---|---|---|---|---|---|---|---|---|
| 0,115 | 0,49 | 0,35 | 0,018 | 0,001 | 11,5 | 0,29 | 1,50 | 0,29 |

| Co | V | Nb | N | B | Al | Cu | Cr$_{équ}$ |
|---|---|---|---|---|---|---|---|
| 1,62 | 0,26 | 0,050 | 0,066 | 0,0049 | 0,008 | 0,08 | 9,28 |

Tableau 9 : Composition chimique (en % en poids) de la coulée 53059 en acier selon l'invention.

Des lingots ont été forgés en barres pleines de diamètre 180 mm qui ont été transformées en tubes sans soudure de diamètre extérieur 60,3 mm et d'épaisseur 8,8 mm par le procédé de laminage continu sur mandrin retenu avec réduction de diamètre sur laminoir réducteur-tireur.

Cette transformation en tubes s'est effectuée sans problème (pas de défectuosité résultant de la présence de ferrite δ) et les tubes résultant présentaient une qualité satisfaisante après contrôle non destructif par ultrasons.

D'autres lingots ont été transformés en gros tubes de diamètre extérieur 406 mm et d'épaisseur 35 mm par le procédé de laminage Pèlerin à chaud.

Là encore le laminage s'est passé sans problème et aucun défaut n'a été observé au stade actuel du contrôle.

Ces résultats confirment les espoirs issus des résultats d'essais de forgeabilité sur coulée expérimentale (voir figure 2 et tableau 2 ci-avant).

Le tableau 10 regroupe les résultats d'essais de traction à l'ambiante sur tubes traités par normalisation à 1060°C et revenu 2h à 780°C.

Le tableau 11 regroupe les résultats d'essais de résilience Charpy V sur tubes ayant subi le même traitement thermique que pour les essais de traction.

Tableau 10 :

| résultats d'essais de traction à l'ambiante sur tubes en acier selon l'invention. | | | |
|---|---|---|---|
| | Rp0,2 (MPa) | Rm (MPa) | A5,65$\sqrt{s}$ (%) |
| tube 60,3 x 8,8 mm | 564 | 781 | 26 |
| tube 406,4 x 35 mm | 587 | 784 | 23 |

Tableau 11 :

| Résultats d'essai de résilience Charpy V sur tube en acier selon l'invention. | KV (J) à : | | | | |
|---|---|---|---|---|---|
| | - 60°C | - 40°C | - 20°C | 0°C | +20°C |
| tube 60,3 x 8,8 mm (*) | 39 | 63 | 72 | 72 | 76 |
| tube 406,4 x 35 mm (**) | | | | | 102 |

(*) éprouvettes réduites 5 mm x 10 mm - essais en sens long.

(**) éprouvettes 10 mm x 10 mm - essais en sens travers.

Les caractéristiques mécaniques de traction et de résilience sur tube sont en ligne avec les résultats sur barreaux issus de coulée expérimentale.

## Revendications

1. Acier pour produits tubulaires sans soudure destinés à un usage à haute température, contenant en poids :

C : 0,06 à 0,20 %
Si : 0,10 à 1,00 %
Mn : 0,10 à 1,00 %
S : inférieur ou égal à 0,010 %
Cr : 10,00 à 13,00 %
Ni : inférieur ou égal à 1,00 %
W : 1,00 à 1,80 %
Mo : tel que (W/2+Mo) est inférieur ou égal à 1,50 %
Co : 0,50 à 2,00 %
V : 0,15 à 0,35 %
Nb : 0,030 à 0,150 %
N : 0,030 à 0,12 %
B : 0,0010 à 0,0100 %,

ainsi qu'optionnellement au plus 0,050 % en poids d'Al et au plus 0,0100 % en poids de Ca,
le reste de la composition chimique étant constitué de fer et des impuretés résultant des procédés d'élaboration.

2. Acier selon la revendication 1, **caractérisé en ce que** les teneurs en constituants de la composition chimique sont reliées par une relation pour que l'acier après traitement thermique de normalisation entre 1050 et 1080° C et revenu possède une structure martensitique revenue exempte ou quasiment exempte de ferrite δ.

3. Acier selon la revendication 1 ou 2, **caractérisé en ce que** sa teneur en Cr est comprise entre 11,00 % et 13 %.

4. Acier selon l'une quelconque des revendications 1 à 3, **caractérisé en ce que** sa teneur en Si est comprise entre 0,20 % et 0,60 %.

**5.** Acier selon l'une quelconque des revendications 1 à 4, **caractérisé en ce que** sa teneur en C est comprise entre 0,10 % et 0,15 %.

**6.** Acier selon l'une quelconque des revendications 1 à 5, **caractérisé en ce que** sa teneur en Co est comprise entre 1,00 % et 1,50 %.

**7.** Acier selon l'une quelconque des revendications 1 à 6, **caractérisé en ce que** sa teneur en Mo est inférieure ou égale à 0, 50 %.

**8.** Acier selon l'une quelconque des revendications 1 à 7, **caractérisé en ce que** sa teneur en Mn est comprise entre 0,10 % et 0,40 %.

**9.** Acier selon l'une quelconque des revendications 1 à 8, **caractérisé en ce que** sa teneur en Ni est inférieure ou égale à 0,50 %.

**10.** Acier selon l'une quelconque des revendications 1 à 9, **caractérisé en ce que** la teneur en Cu de l'acier est inférieure ou égale à 0,25 % et préférentiellement inférieure ou égale à 0,10 %.

**11.** Acier selon l'une quelconque des revendications 1 à 10, **caractérisé en ce que** sa teneur en S est inférieure ou égale à 0,005 % et préférentiellement inférieure ou égale à 0,003 %.

**Claims**

**1.** A steel for seamless tubular products intended for high temperature use, containing, by weight:

| | |
|---|---|
| C | 0.06% to 0.20% |
| Si | 0.10% to 1.00% |
| Mn | 0.10% to 1.00% |
| S | 0.010% or less |
| Cr | 10.00% to 13.00% |
| Ni | 1.00% or less |
| W | 1.00% to 1.80% |
| Mo | such that (W/2 + Mo) is 1.50% or less |
| Co | 0.50% to 2.00% |
| V | 0.15% to 0.35% |
| Nb | 0.030% to 0.150% |
| N | 0.030% to 0.12% |
| B | 0.0010% to 0.0100% |

and optionally, at most 0.050% by weight of Al and at most 0.0100% by weight of Ca;
the remainder of the chemical composition being constituted by iron and impurities resulting from steelmaking processes.

**2.** A steel according to claim 1, **characterized in that** the amounts of the constituents of the chemical composition are linked by a relationship such that after normalization heat treatment between 1050°C and 1080°C and tempering, the steel has a tempered martensitic structure that is free of or almost free of $\delta$ ferrite.

**3.** A steel according to claim 1 or claim 2, **characterized in that** its Cr content is in the range 11.00% to 13%.

**4.** A steel according to any one of claims 1 to 3, **characterized in that** its Si content is in the range 0.20% to 0.60%.

**5.** A steel according to any one of claims 1 to 4, **characterized in that** its C content is in the range 0.10% to 0.15%.

**6.** A steel according to any one of claims 1 to 5, **characterized in that** its Co content is in the range 1.00% to 1.50%.

7.  A steel according to any one of claims 1 to 6, **characterized in that** its Mo content is 0.50% or less.

8.  A steel according to any one of claims 1 to 7, **characterized in that** its Mn content is in the range 0.10% to 0.40%.

9.  A steel according to any one of claims 1 to 8, **characterized in that** its Ni content is 0.50% or less.

10. A steel according to any one of claims 1 to 9, **characterized in that** the Cu content in the steel is 0.25% or less and preferably 0.10% or less.

11. A steel according to any one of claims 1 to 10, **characterized in that** its S content is 0.005% or less, and preferably 0.003% or less.

**Patentansprüche**

1.  Stahl für röhrenförmige, nahtlose Gegenstände zur Verwendung bei hohen Temperaturen, der auf das Gewicht bezogen enthält:

    C :      0,06 bis 0,20 %
    Si :     0,10 bis 1,00%
    Mn :    0,10 bis 1,00%
    S :      0,010 % oder darunter
    Cr :    10,00 bis 13,00 %
    Ni :    1,00 % oder darunter
    W :    1,00 bis 1,80%
    Mo :   in einer solchen Menge, dass (W/2+ Mo) einen Wert von 1,50 % aufweist oder darunter liegt
    Co :   0,50 bis 2,00 %
    V :     0,15 bis 0,35%
    Nb :   0,030 bis 0,150%
    N :    0,030 bis 0,12 %
    B :    0,0010 bis 0,0100%,

    sowie gegebenenfalls höchstens 0,050 Gew.-% Al und höchstens 0,0100 Gew.-% Ca,
    wobei die restliche chemische Zusammensetzung aus Eisen und Verunreinigungen besteht, die aus den Verarbeitungsverfahren stammen.

2.  Stahl nach Anspruch I, **dadurch gekennzeichnet, dass** die Mengenanteile der Bestandteile der chemischen Zusammensetzung über eine solche Beziehung verknüpft sind, dass der Stahl nach Normalglühen bei 1050 bis 1080°C und Anlassen ein martensitisches Vergütungsgefüge ohne oder praktisch ohne 5-Ferrit aufweist.

3.  Stahl nach Anspruch I oder 2, **dadurch gekennzeichnet, dass** sein Cr-Gehalt im Bereich von 11,00 bis 13 % liegt.

4.  Stahl nach einem der Ansprüche I bis 3, **dadurch gekennzeichnet, dass** sein Si-Gehalt im Bereich von 0,20 bis 0,60 % liegt.

5.  Stahl nach einem der Ansprüche I bis 4, **dadurch gekennzeichnet, dass** sein C-Gehalt im Bereich von 0,10 bis 0,15 % liegt.

6.  Stahl nach einem der Ansprüche I bis 5, **dadurch gekennzeichnet, dass** sein Co-Gehalt im Bereich von 1,00 bis 1,50 % liegt.

7.  Stahl nach einem der Ansprüche I bis 6, **dadurch gekennzeichnet, dass** sein Mo-Gehalt höchstens 0,50 % beträgt.

8.  Stahl nach einem der Ansprüche I bis 7, **dadurch gekennzeichnet, dass** sein Mn-Gehalt im Bereich von 0,10 bis 0,40 % liegt.

9. Stahl nach einem der Ansprüche I bis 8, **dadurch gekennzeichnet, dass** sein Ni-Gehalt höchstens 0,50 % beträgt.

10. Stahl nach einem der Ansprüche I bis 9, **dadurch gekennzeichnet, dass** der Cu-Gehalt des Stahls höchstens 0,25 % und vorzugsweise höchstens 0,10 % beträgt.

11. Stahl nach einem der Ansprüche I bis 10, **dadurch gekennzeichnet, dass** sein S-Gehalt höchstens 0,005 % und vorzugsweise höchstens 0,003 % beträgt.

Fig 1

Fig. 2

Fig. 3a)

Fig. 3b)

Fig. 4

Fig. 5

Fig. 6